# EUROPEAN PATENT APPLICATION

(11) **EP 2 781 317 A1**
(43) Date of publication of application: **24.09.2014**
(21) Application number: 14158790.7
(22) Date of filing: 11.03.2014
(51) Int. Cl.: B25J 18/00, B25J 9/00

(54) **Robot having a link made out of a welded steel pipe having a elliptical or subtantially rectangular shape**

(30) Priority: 19.03.2013 JP 2013057115
(71) Applicant: Kabushiki Kaisha Yaskawa Denki, Kitakyushu-shi, Fukuoka 806-0004 (JP)
(72) Inventor: Harada, Osamu, Kitakyushu-shi, Fukuoka 806-0004 (JP); Ichibangase, Atsushi, Kitakyushu-shi, Fukuoka 806-0004 (JP)
(74) Representative: Viering, Jentschura & Partner Patent- und Rechtsanwälte

(57) **Abstract**

A robot includes a link having a longitudinal base end rotatably connected to a member so as to rotate about a rotation axis perpendicular to a longitudinal direction of the link. The link is formed into a tubular shape such that a cross section of the link perpendicular to the longitudinal direction has an elliptical shape or a substantially rectangular shape with at least one curvilinear corner portion.

## Description

### BACKGROUND OF THE INVENTION

### Field of the Invention

Embodiments disclosed herein relate to a robot.

### Description of the Related Art

Conventionally, there is proposed a robot which includes a plurality of links connected to make rotation relative to one another and which performs a specified task with an end effector (e.g., a hand) mounted to the tip end of the links (see, e.g., Japanese Patent Application Publication No. 2012-171072). In the technology disclosed in Japanese Patent Application Publication No. 2012-171072, each of the links of the robot has a rectangular parallelepiped shape and is formed such that the cross section thereof taken in a direction perpendicular to the longitudinal direction has a rectangular shape.

Stresses such as bending stresses and torsional stresses are exerted on a link of a robot as the robot makes, e.g., a rotating motion. However, if the cross section of the link has a rectangular shape as mentioned above, the stresses may be concentrated on, e.g., the corner portions of the rectangular cross section.

### SUMMARY OF THE INVENTION

Embodiments disclosed herein provide a robot capable of alleviating local concentration of stresses generated by the motion of a link.

A robot according to one embodiment includes a link having a longitudinal base end rotatably connected to a member so as to rotate about a rotation axis perpendicular to a longitudinal direction of the link. The link is formed into a tubular shape such that a cross section of the link perpendicular to the longitudinal direction has an elliptical shape or a substantially rectangular shape with at least one curvilinear corner portion.

According to the embodiments disclosed herein, it is possible to alleviate local concentration of stresses generated by the motion of a link.

### BRIEF DESCRIPTION OF THE DRAWINGS

Fig. 1 is a schematic side view showing a robot according to a first embodiment.
Fig. 2 is a schematic perspective view of the robot shown in Fig. 1.
Fig. 3 is a side view showing a lower arm of the robot shown in Fig. 1.
Fig. 4 is a right side view of the lower arm shown in Fig. 3.
Fig. 5 is a sectional view taken along line V-V in Fig. 3.
Fig. 6 is a schematic perspective view of the lower arm of the robot shown in Fig. 1.
Fig. 7A is an explanatory schematic perspective view for explaining a manufacturing process of the lower arm of the robot shown in Fig. 1.
Fig. 7B is another explanatory schematic perspective view for explaining the manufacturing process of the lower arm of the robot shown in Fig. 1.
Fig. 7C is a further explanatory schematic perspective view for explaining the manufacturing process of the lower arm of the robot shown in Fig. 1.
Fig. 8 is a sectional view taken along line VIII-VIII in Fig. 7B.
Fig. 9 is a side view showing a lower arm of a robot according to a second embodiment.
Fig. 10 is a right side view of the lower arm shown in Fig. 9.
Fig. 11 is a sectional view taken along line XI-XI in Fig. 9.
Fig. 12 is a side view showing a lower arm of a robot according to a third embodiment.
Fig. 13 is a right side view of the lower arm shown in Fig. 12.
Fig. 14 is a sectional view taken along line XIV-XIV in Fig. 12.
Fig. 15 is a sectional view similar to Fig. 14 but showing a modified example of the lower arm of the robot according to the third embodiment.

### DESCRIPTION OF THE EMBODIMENTS

Embodiments of a robot disclosed in the subject application will now be described in detail with reference to the accompanying drawings which form a part hereof. The present disclosure is not limited by the embodiments described below.

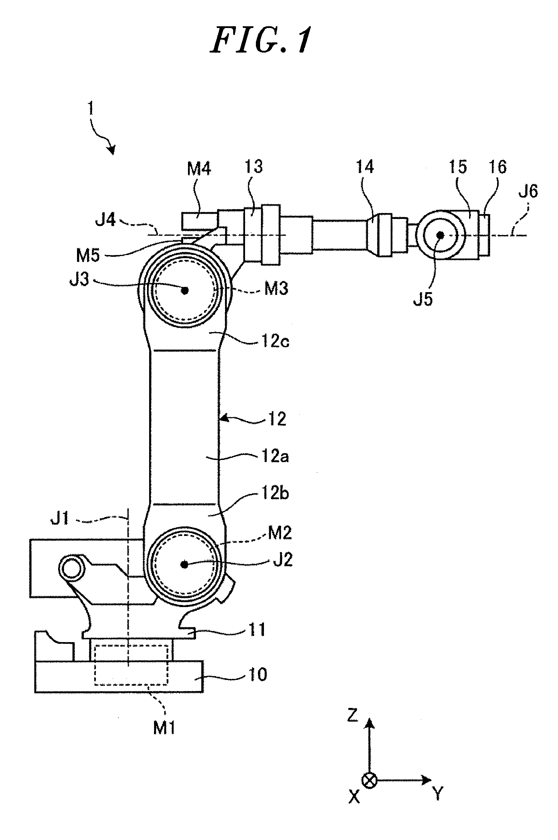

For the sake of making the description easily understandable, Fig. 1 indicates a three-dimensional rectangular coordinate system including a Z-axis whose positive direction is a vertical upward direction and whose negative direction is a vertical downward direction, a Y-axis which extends in the left-right direction on the drawing sheet plane and an X-axis which extends from the front side to the rear side of the drawing sheet plane. The rectangular coordinate system will be sometimes indicated in other drawings used in the following description.

Hereinafter, the configuration of the robot will be described using such expressions as "X-axis direction", "Y-axis direction" and "Z-axis direction". These expressions are intended to mean the X-axis direction, the Y-axis direction and the Z-axis direction when the robot takes the postures shown in the drawings. The present disclosure is not limited to these directions.

In the drawings and the following description of embodiments, the axes parallel to the installation surface of the robot (e.g., the horizontal surface) and orthogonal to each other will be defined as the X-axis and the Y-axis. The axis normal to the installation surface will be defined as the Z-axis.

### (First Embodiment)

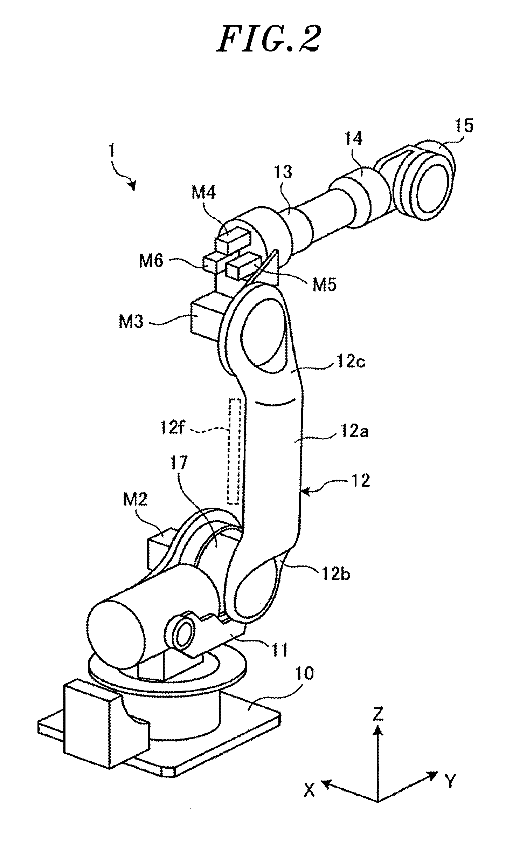

Fig. 1 is a schematic side view showing a robot according to a first embodiment. Fig. 2 is a schematic perspective view of the robot shown in Fig. 1.

As shown in Figs. 1 and 2, the robot 1 is an articulated robot which includes a plurality of links and a plurality of rotation axes (joint axes) J1 to J6 (see Fig. 1) where the links are connected to one another. The robot 1 includes, as the links, a base 10, a swing unit (a first member) 11, a lower arm (link) 12, an upper arm (a second member) 13, a first wrist unit 14, a second wrist unit 15 and a third wrist unit 16 (not shown in Fig. 2), which are rotatably connected to one another.

More specifically, as shown in Fig. 1, the swing unit 11 is connected to the base 10 to rotate about the rotation axis J1. The lower arm 12 is connected to the swing unit 11 to rotate about the rotation axis J2 perpendicular to the rotation axis J1. The upper arm 13 is connected to the lower arm 12 to rotate about the rotation axis J3 parallel to the rotation axis J2. The first wrist unit 14 is connected to the upper arm 13 to rotate about the rotation axis J4 perpendicular to the rotation axis J3.

The second wrist unit 15 is connected to the first wrist unit 14 to rotate about the rotation axis J5 perpendicular to the rotation axis J4. The third wrist unit 16 is connected to the second wrist unit 15 to rotate about the rotation axis J6 perpendicular to the rotation axis J5.

The lower arm 12 is a link whose longitudinal direction extends in the Z-axis direction when the lower arm 12 is kept in the position shown in Fig. 1. The longitudinal base end, i.e., the lower end in Fig. 1, of the lower arm 12 is rotatably connected to the swing unit 11 as a first member. On the other hand, the upper arm 13 as a second member is rotatably connected to the tip end, i.e., the upper end in Fig. 1, of the lower arm 12.

The aforementioned terms such as "perpendicular", "parallel" and the like and the below-mentioned terms such as "orthogonal" or the like do not necessarily require strict accuracy in terms of mathematics but permits substantial tolerances or errors. In the subject specification, the term "perpendicular" is intended to mean not only a case where two straight lines (e.g., two rotation axes) intersect each other at the right angle on the same plane but also a case where two straight lines lying on different planes make a right angle with each other. In the subject specification, the term "orthogonal" is intended to mean a case where two straight lines intersect each other at the right angle on the same plane.

The robot 1 further includes actuators M1 to M6 for rotationally driving the swing unit 11, the lower arm 12, the upper arm 13 and the first to third wrist units 14, 15 and 16. The power of each of the actuators M1 to M6 is transferred through a speed reducer to the corresponding link connected thereto. The actuators M1 to M6 include, e.g., servo motors. However, the actuators M1 to M6 are not limited to the servo motors but may be other motors such as hydraulic motors and the like. In the following description, the actuators will be referred to as "motors".

Description will now be made on the respective motors M1 to M6. The motor M1 (see Fig. 1) attached to the base 10 is connected to the swing unit 11 through a speed reducer (not shown) and is configured to rotationally drive the swing unit 11. The motor M2 attached to the swing unit 11 is connected to the lower arm 12 through a speed reducer 17 (see Fig. 2) and is configured to rotationally drive the lower arm 12. The motor M3 attached to the lower arm 12 is connected to the upper arm 13 through a speed reducer (not shown) and is configured to rotationally drive the upper arm 13. The motor M4 attached to the upper arm 13 is connected to the first wrist unit 14 through a speed reducer (not shown) and is configured to rotationally drive the first wrist unit 14.

The motors M5 and M6 (the latter of which is not shown in Fig. 1) are attached to the upper arm 13 just like the motor M4. The motor M5 is connected to the second wrist unit 15 through, e.g., a belt-pulley mechanism or a gear mechanism (not shown), and is configured to rotationally drive the second wrist unit 15. Similarly, the motor M6 is connected to the third wrist unit 16 through, e.g., a belt-pulley mechanism (not shown), and is configured to rotationally drive the third wrist unit 16.

Signals indicating operation commands are inputted from a control unit (not shown) to the motors M1 to M6. The operations of the motors M1 to M6 are controlled pursuant to the signals. An end effector (e.g., a hand) (not shown) is attached to the third wrist unit 16.

As control unit controls the operations of the motors M1 to M6, the robot 1 performs a specified task, e.g., a workpiece transfer task, while appropriately changing, e.g., the position and angle of the end effector.

Stresses such as bending stresses and torsional stresses generated by, e.g., the rotating motion or the swing motion of each link of the robot 1 configured as above, and stresses generated by the load of another link connected to the tip end side thereof are exerted on the corresponding link. For example, stresses generated by the rotating motion of the lower arm 12 about the rotation axis J2 and the swing motion of the lower arm 12 about the rotation axis J1 and stresses generated by the loads of the upper arm 13 and the first to third wrist units 14, 15 and 16 connected to the tip end side thereof are exerted on the lower arm 12.

Thus, for example, if the horizontal cross section of the lower arm 12, i.e., the cross section of the lower arm 12 perpendicular to the longitudinal direction (the Z-axis direction) in Fig. 1, has a rectangular shape, there is a fear that the stresses are concentrated on the corner portions of the rectangular cross section.

In the robot 1 according to the present embodiment, at least one of the links, e.g., the lower arm 12, is configured to alleviate local concentration of stresses generated by the motion of the corresponding link. Hereinafter, this configuration will be described in detail.

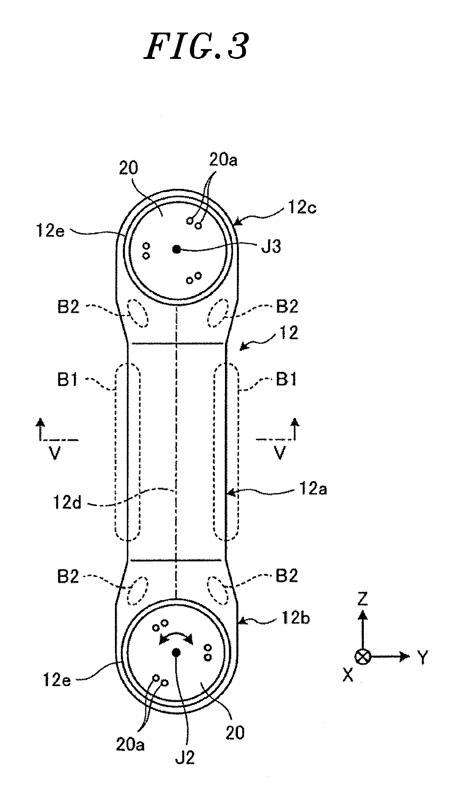

Description will be made in more detail with reference to Figs. 3 to 5.

The lower arm 12 is formed to have a substantially rectangular contour when seen in a side view shown in Fig. 3. The lower arm 12 includes a body portion 12a, a base end portion 12b and a tip end portion 12c. The base end portion 12b is an end portion connected to the swing unit 11. The tip end portion 12c is an end portion connected to the upper arm 13. The body portion 12a is positioned between the base end portion 12b and the tip end portion 12c. Plates 20 (to be described later), to which connecting the respective motors M2 and M3 are connected through speed reducers, are respectively attached to the base end portion 12b and the tip end portion 12c.

The body portion 12a, the base end portion 12b and the tip end portion 12c of the lower arm 12 are formed by a single continuous tubular member, e.g., a tubular welded steel pipe. The welded steel pipe is, e.g., a steel pipe formed by machining a steel plate into a tubular shape with a press machine and then welding and joining the ends of the rounded steel plate.

In Fig. 3 and other figures, the welded portion of the lower arm 12 is indicated by a single-dot chain line. Hereinafter, the welded portion of the lower arm 12 will be referred as a "welded portion 12d". The welded portion 12d is formed in the region of the lower arm 12 where stresses become relatively small. The welded portion 12d will be described later in more detail.

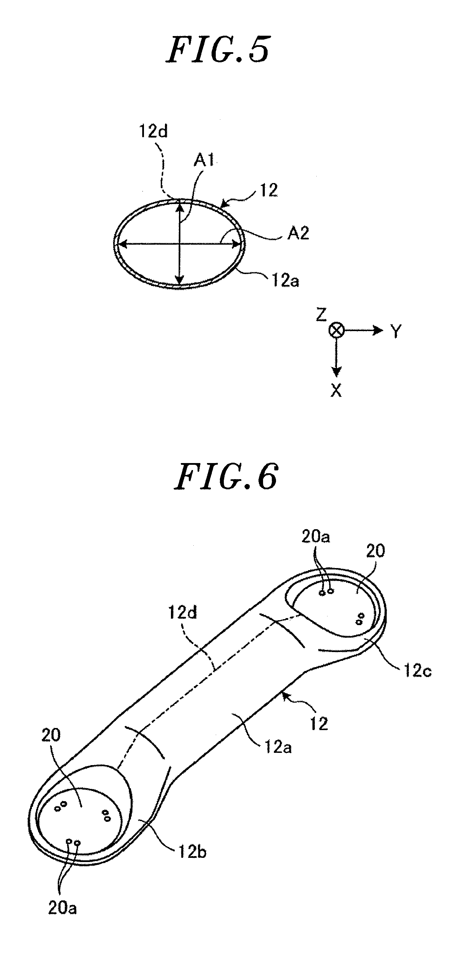

As best shown in Fig. 5, the cross section of the lower arm 12 taken in a direction perpendicular to the Z-axis direction as the longitudinal direction, i.e., the cross section of the lower arm 12 taken along the XY plane, has an elliptical shape. In Fig. 5, there is illustrated a cross-sectional shape of the body portion 12a. As can be noted from the manufacturing process of the lower arm 12 to be described later, the base end portion 12b and the tip end portion 12c has an elliptical cross-sectional shape.

In this way, the lower arm 12 is formed to have an elliptical cross-sectional shape free from a rectangular corner portion where stresses are apt to be concentrated. This makes it possible to alleviate local concentration of stresses.

In the posture shown in Fig. 1, the minor axis A1 (see Fig. 5) of the elliptical cross section of the lower arm 12 is parallel to the rotation axis J2 (extending in the X-axis direction) which is positioned at the side of the base end portion 12b. Thus, the major axis A2 (see Fig. 5) of the elliptical cross section of the lower arm 12 is perpendicular to the rotation axis J2 and is parallel to the Y-axis direction.

This makes it possible to increase the bending rigidity of the lower arm 12. That is to say, as shown in Fig. 3 and other figures, if the lower arm 12 makes a rotating motion about the rotation axis J2, bending stresses are easily generated in the left and right end portions of the lower arm 12 shown in Fig. 3, specifically the regions designated by reference symbol B1. In the lower arm 12 according to the present embodiment, the end portions of the major axis A2 of the elliptical cross section, which show relatively high rigidity against the stresses generated by the rotating motion of the lower arm 12, are positioned to become the left and right end portions in Fig. 3. This makes it possible to increase the bending rigidity of the lower arm 12.

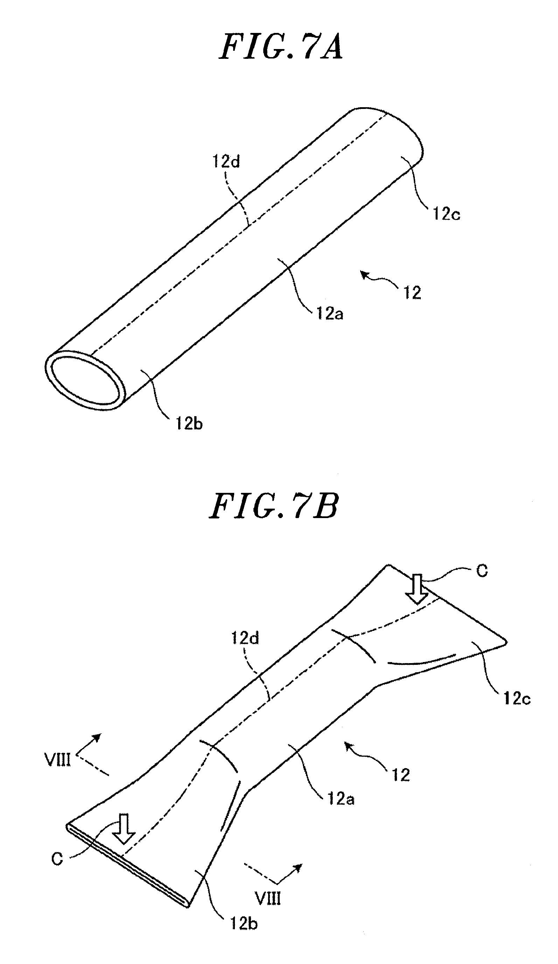

Next, the configuration of the lower arm 12 will be continuously described while describing a manufacturing process of the lower arm 12 with reference to Figs. 7A to 7C. Figs. 7A to 7C are explanatory schematic perspective views for explaining a manufacturing process of the lower arm 12 shown in Fig. 1.

First, as shown in Fig. 7A, a tubular welded steel pipe is manufactured. More specifically, for example, one sheet of steel plate is machined into a tubular shape using a press machine such as a U press or an O press (not shown). At this time, the steel plate is machined such that the cross section thereof taken in a direction perpendicular to the longitudinal direction has an elliptical shape.

Then, the opposite lateral ends of the elliptically rounded steel plate are welded and joined by arc welding, etc., to form a welded portion 12d. Thus, the welded steel pipe shown in Fig. 7A is obtained. The steel plate mentioned above is, e.g., a high-tensile steel plate having relatively high tensile strength.

In this way, the lower arm 12 is manufactured by a tubular welded steel pipe made of a high-tensile steel plate. It is therefore possible to increase the strength of the lower arm 12 and to reduce the thickness thereof. That is to say, it is possible to reduce the weight of the lower arm 12. In the aforementioned example, a high-tensile steel plate is used as the steel plate. However, the present disclosure is not limited thereto. The steel plate may be, e.g., an ordinary structural steel plate or other kinds of steel plates.

Next, as shown in Fig. 7B, the longitudinal end portions of the welded steel pipe, which will become the base end portion 12b and the tip end portion 12c later, are pressed in the direction of arrow C by a press machine (not shown). More specifically, the longitudinal end portions of the welded steel pipe are pressed and crushed toward the sides at which the swing unit 11 and the upper arm 13 will be connected later.

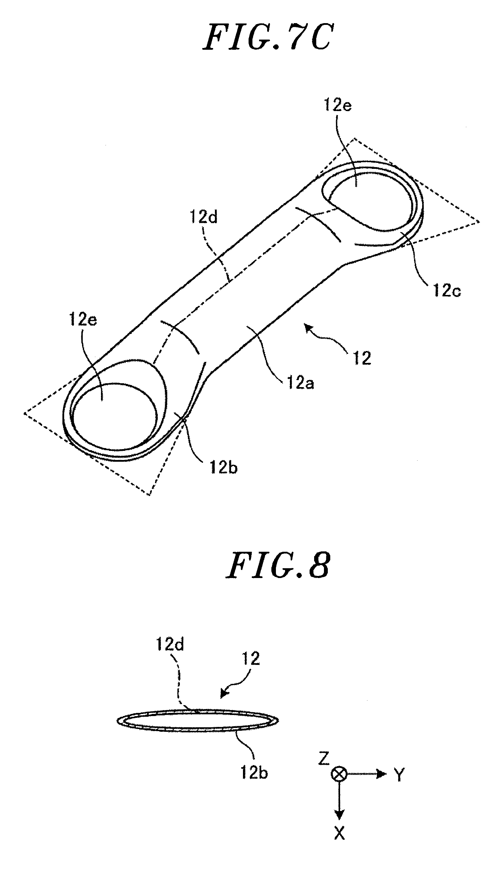

Then, as shown in Fig. 7C, the base end portion 12b and the tip end portion 12c thus crushed are cut away by a cutting machine (not shown) such that the outer peripheries of the base end portion 12b and the tip end portion 12c have an arc shape when seen in a side view (when seen in the X-axis direction). In Fig. 7C, the cut-away regions are indicated by broken lines.

Next, holes 12e into which plates 20 can be fitted are formed in appropriate positions of the base end portion 12b and the tip end portion 12c by a punch press machine. The plates 20 are fitted into, and attached to, the holes 12e thus formed. Consequently, the lower arm 12 shown in Fig. 6 and other figures is obtained.

As shown in Fig. 6, each of the plates 20 is formed into, e.g., a disc shape. A plurality of connection holes 20a is formed in appropriate positions of each of the plates 20. The motors M2 and M3 are respectively connected through speed reducers to the connection holes 20a of the plates 20 by virtue of fastening members (e.g., bolts and nuts) (not shown). More specifically, the motor M2 is connected through a speed reducer 17 to the plate 20 of the base end portion 12b. Similarly, the motor M3 is connected through a speed reducer to the plate 20 of the tip end portion 12c.

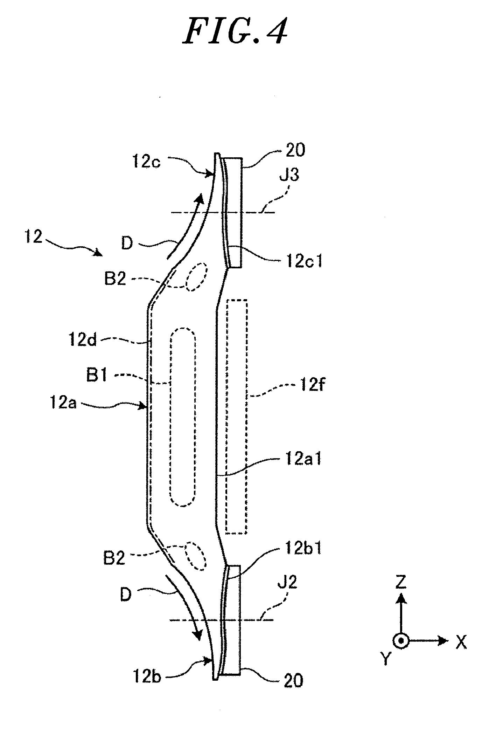

The base end portion 12b and the tip end portion 12c of the lower arm 12 are pressed in the aforementioned manner. At this time, as indicated by arrows D in Fig. 4, the base end portion 12b and the tip end portion 12c are pressed such that the outer surfaces thereof (the left surfaces in Fig. 4) are gently inclined. That is to say, the base end portion 12b and the tip end portion 12c are pressed such that the cross-sectional shapes of the base end portion 12b and the tip end portion 12c are gently changed.

Fig. 8 is a sectional view taken along line VIII-VIII in Fig. 7B, showing the pressed lower arm 12. The base end portion 12b and the tip end portion 12c of the lower arm 12 are pressed in the aforementioned manner. Thus, as can be noted from the comparison of Figs. 5 and 8 and as shown in Fig. 4, the cross-sectional area of the lower arm 12 gradually decreases toward the base end portion 12b or the tip end portion 12c. The term "cross-sectional area" used herein means the area of the portion surrounded by an outer periphery of the lower arm 12 in the sectional view shown in Figs. 5 and 8, namely the area of the interior of the lower arm 12.

As a consequence, the base end portion 12b and the tip end portion 12c can avoid an abrupt change in the cross-sectional area thereof. This makes it possible to distribute the stresses generated in the base end portion 12b and the tip end portion 12c. Since the base end portion 12b and the tip end portion 12c are pressed and crushed, the portions of the lower arm 12 around the rotation axes J2 and J3 can be made compact. Inasmuch as the base end portion 12b and the tip end portion 12c of the lower arm 12 are machined by pressing, it is possible to increase the fatigue strength through the use of work hardening.

As shown in Fig. 4, the lower arm 12 is formed by the pressing work such that the connection surfaces 12b1 and 12c1, to which the motors M2 and M3 are connected, protrude toward the positive side of the X-axis, namely toward the motors M2 and M3, more than the side surface 12a1 of the body portion 12a. Thus, as shown in Fig. 2, a space 12f is formed near the side surface 12a1 of the body portion 12a.

Depending on the posture of the robot 1, the upper arm 13 or the like may pass through the vicinity of the side surface 12a1 of the body portion 12a of the lower arm 12. In this case, if the upper arm 13 or the like is allowed to pass through the space 12f, it is possible to prevent the upper arm 13 or the like from interfering with the lower arm 12.

Next, description will be made on the welded portion 12d of the lower arm 12. The welded portion 12d specifically refers to a welding mark (bead) generated by welding. The welded portion 12d is formed in the region of the lower arm 12 where stresses are relatively small. In other words, the welded portion 12d is formed in the region of the lower arm 12, which does not overlap with the region on which stresses are concentrated.

More specifically, a stress distribution which indicates the magnitude of stresses generated by the rotating motion of the lower arm 12 about the rotation axis J2 and the swing motion of the lower arm 12 about the rotation axis J1 and the magnitude of stresses generated by the loads of the upper arm 13 and the like connected to the tip end portion 12c can be obtained in advance using a finite element method.

For instance, as shown in Fig. 3, the stress distribution shows that bending stresses attributable to the rotating motion of the lower arm 12 or the loads of the upper arm 13 and the like are apt to generate in or around the regions B1 and further that torsional stresses attributable to the swing motion of the lower arm 12 are prone to generate in or around the regions B2.

Accordingly, in the lower arm 12 according to the present embodiment, the welded portion 12d is formed in a position spaced apart from the regions B1 and B2 where stresses are apt to generate, i.e., in a region where stresses are relatively small.

In this way, the welded portion 12d is formed in the reduced-stress region of the lower arm 12 selected according to the pre-acquired stress distribution indicating the magnitude of the stresses generated in the lower arm 12, e.g., in the region of the lower arm 12 where the stresses are equal to or smaller than a threshold value. Specifically, the welded portion 12d is formed on a plane which is orthogonal to the rotation axis J2 and which is parallel to the longitudinal direction (X-axis direction) of the lower arm 12. More specifically, the welded portion 12d is formed on an XZ plane which is orthogonal to the rotation axis J2. This makes it possible to alleviate the stresses acting on the welded portion 12d.

In the aforementioned example, the welded portion 12d is formed to extend along the left end of the lower arm 12 shown in Fig. 4. Alternatively, the welded portion 12d may be formed to extend along, e.g., the right end of the lower arm 12 opposite to the left end of the lower arm 12 shown in Fig. 4. Moreover, in the aforementioned example, the welded portion 12d is formed on a plane orthogonal to the rotation axis J2. However, the present disclosure is not limited thereto. The welded portion 12d may be formed in any position where stresses are relatively small. That is to say, the welded portion 12d may be shifted from the position shown in Fig. 3 to the right or left along the drawing sheet plane or may be inclined at a specified angle in Fig. 3.

As described above, in the first embodiment, the lower arm 12 is formed into a tubular shape such that the cross section taken in the direction perpendicular to the longitudinal direction has an elliptical shape. It is therefore possible to alleviate local concentration of the stresses generated by the motion of a link of the robot 1, e.g., the motion of the lower arm 12, or the like.

### (Second Embodiment)

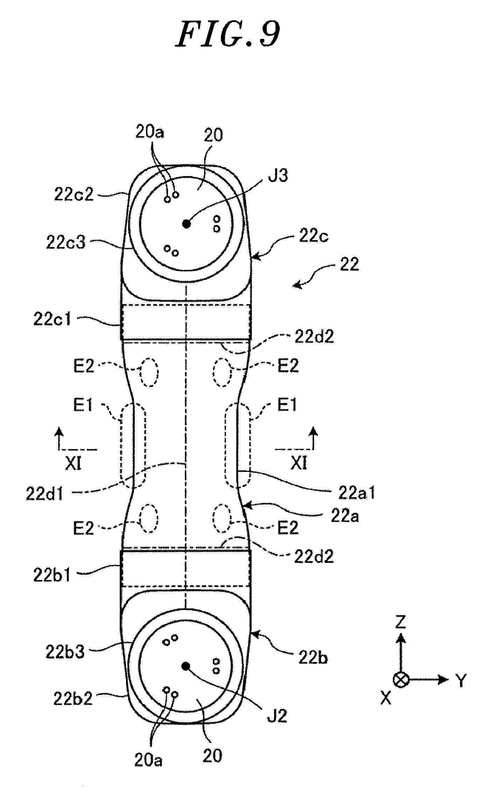

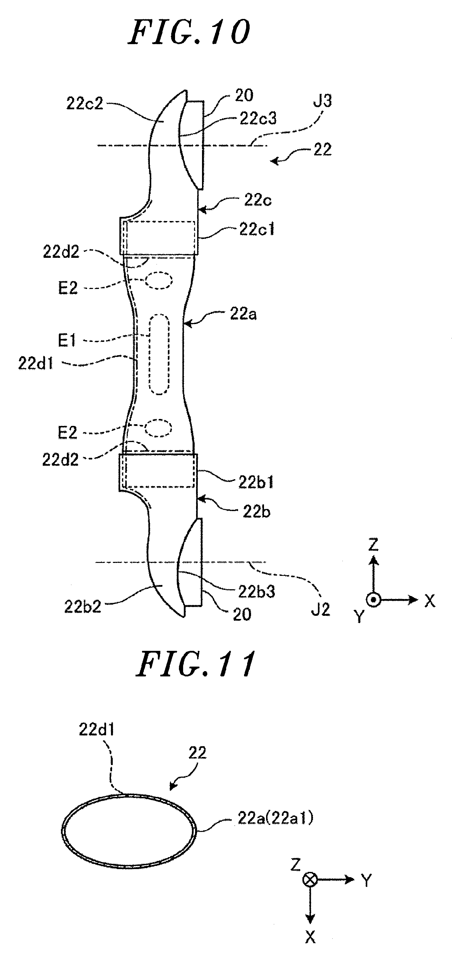

Fig. 9 is a side view similar to Fig. 3, showing a lower arm 22 of a robot 1 according to a second embodiment. Fig. 10 is a right side view of the lower arm 22 shown in Fig. 9. Fig. 11 is a sectional view taken along line XI-XI in Fig. 9. Hereinafter, the same components as those of the first embodiment will be designated by like reference symbols with the description thereon omitted.

Description will now be made with emphasis placed on the points differing from the first embodiment. In the robot 1 according to the second embodiment, the lower arm 22 differs in configuration from the lower arm 12 of the first embodiment.

Describing in detail, the lower arm 22 is composed of a plurality of members, e.g., three members. More specifically, the lower arm 22 includes a body portion 22a, a base end portion (first end portion) 22b and a tip end portion (second end portion) 22c.

As with the body portion 12a of the first embodiment, the body portion 22a is manufactured by a tubular welded steel pipe. As shown in Fig. 11, the body portion 22a has an elliptical cross-sectional shape. The base end portion 22b and the tip end portion 22c are also manufactured by welded steel pipes as described later. The welded portion of the welded steel pipes is designated by reference symbol 22d1.

The body portion 22a includes a neck section 22a1 formed such that the pipe diameter in the middle region of the body portion 22a becomes smaller than the pipe diameter in the end regions of the body portion 22a to which the base end portion 22b and the tip end portion 22c are connected.

The base end portion 22b includes a body connection section 22b1 to which the body portion 22a is connected and a motor connection section 22b2 to which the motor M2 is connected. The body connection section 22b1 and the motor connection section 22b2 are formed so as to continuously extend and are manufactured by machining a tubular welded steel pipe having an elliptical cross section.

The body connection section 22b1 includes an opening into which an end section of the body portion 22a (a lower end section of the body portion 22a in Figs. 9 and 10) can be fitted. The body portion 22a is inserted and fitted into the opening of the body connection section 22b1. While not specifically shown, as can be appreciated in Fig. 10, the motor connection section 22b2 is formed such that the cross-sectional area thereof gradually decreases toward the end thereof (the lower end in Fig. 10). As a consequence, the motor connection section 22b2 can avoid an abrupt change in the cross-sectional area thereof. This makes it possible to distribute the stresses generated in the motor connection section 22b2.

As with the base end portion 12b of the first embodiment, the motor connection section 22b2 has a hole 22b3 to which a plate 20 is fitted and attached.

The tip end portion 22c has substantially the same shape as the base end portion 22b. Thus, the body connection section 22b1, the motor connection section 22b2 and the hole 22b3 of the base end portion 22b correspond respectively to the body connection section 22c1, the motor connection section 22c2 and the hole 22c3 of the tip end portion 22c. No description will be made on the components of the tip end portion 22c.

The base end portion 22b, the tip end portion 22c and the body portion 22a are manufactured by welded steel pipes. However, the base end portion 22b and the tip end portion 22c differ in the welded steel pipe material from the body portion 22a. For example, the welded steel pipes for the manufacture of the base end portion 22b and the tip end portion 22c are higher in the tensile strength than the welded steel pipe for the manufacture of the body portion 22a. This makes it possible to increase the rigidity of the portions of the lower arm 22 existing near the rotation axes J2 and J3 where stresses are apt to generate, namely the rigidity of the base end portion 22b and the tip end portion 22c.

The base end portion 22b and the tip end portion 22c configured as above are fitted to the body portion 22a and are welded and connected to the body portion 22a by, e.g., arc welding. The welding marks generated by the welding are indicated by single-dot chain lines and are designated by reference symbol 22d2 in Figs. 9 and 10. Hereinafter, the welding marks will be referred to as "connection welding portions 22d2".

The welded portion 22d1 and the connection welding portions 22d2 are formed in the reduced-stress regions of the lower arm 12 selected according to the pre-acquired stress distribution. More specifically, as shown in Fig. 9, bending stresses attributable to, e.g., the rotating motion of the lower arm 12 or the loads of the upper arm 13 and the like are apt to generate in or around the regions E1. Torsional stresses attributable to the swing motion of the lower arm 12 are prone to generate in or around the regions E2. The bending stresses and the torsional stresses are indicated by the aforementioned stress distribution.

Comparing Fig. 9 with Fig. 3, it can be appreciated that the regions E1 where bending stresses are apt to generate and the regions E2 where torsional stresses are prone to generate have moved closer to the center of the body portion 22a, namely the neck section 22a1, as compared with the regions B1 and B2 of the first embodiment.

This is because the neck section 22a1 is formed in the body portion 22a. By making the body portion 22a partially thin in this manner, the stress acting regions are moved toward the center of the body portion 22a. As a consequence, the welded portion 22d1 and the connection welding portions 22d2 can be formed in the regions spaced apart from the regions E1 and E2 where stresses are apt to act, namely in the regions where stresses are relatively small. This makes it possible to alleviate the stresses acting on the welded portion 22d1 and the connection welding portions 22d2. Consequently, it is possible to increase the rigidity of the lower arm 22.

As described above, in the second embodiment, the lower arm 22 is configured to include a plurality of members, namely the body portion 22a, the base end portion 22b welded and connected to the body portion 22a, and the tip end portion 22c welded and connected to the body portion 22a. Thus, the materials of the respective members of the lower arm 22 can be made different from one another. This helps increase the rigidity of the lower arm 22. More precisely, it is possible to increase the rigidity of the base end portion 22b and the tip end portion 22c. Other configurations and effects remain the same as those of the first embodiment and, therefore, will not be described.

### (Third Embodiment)

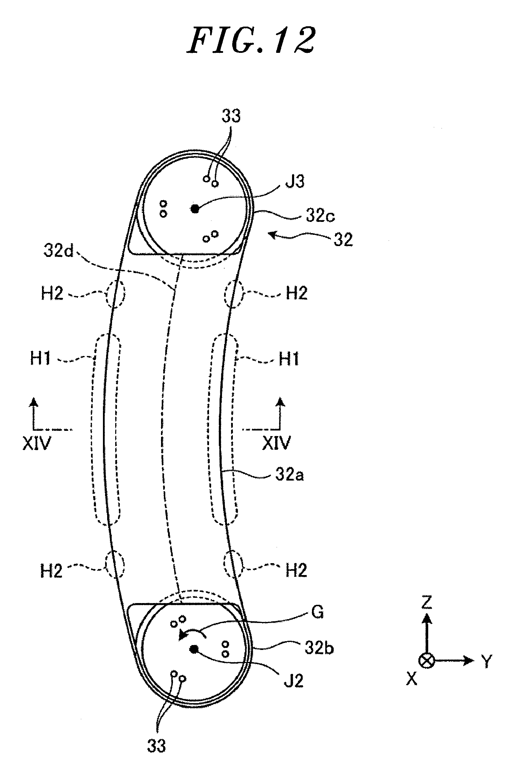

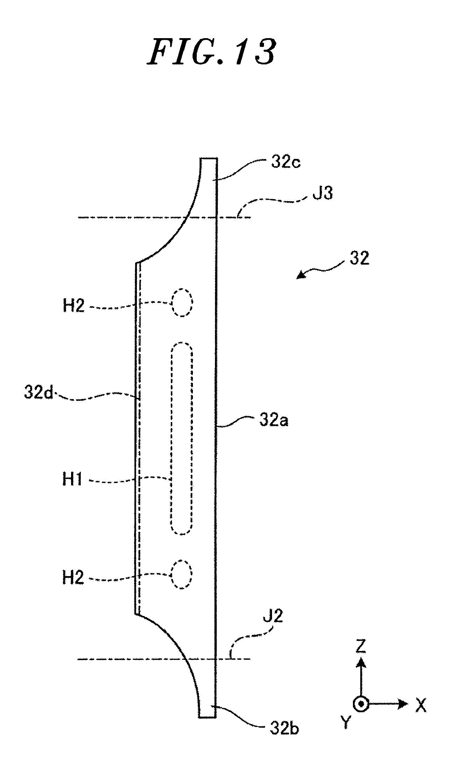

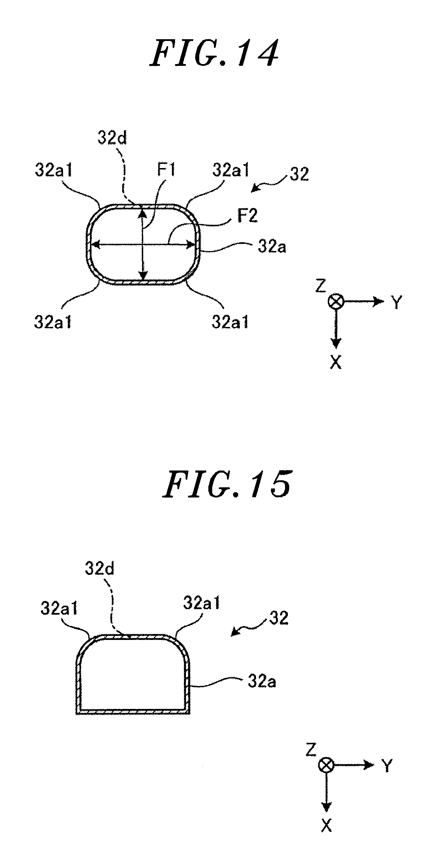

Fig. 12 is a side view similar to Fig. 3, showing a lower arm 32 of a robot 1 according to a third embodiment. Fig. 13 is a right side view of the lower arm 32 shown in Fig. 12. Fig. 14 is a sectional view taken along line XIV-XIV in Fig. 12.

Description will now be made with emphasis placed on the points differing from the first embodiment. In the robot 1 according to the third embodiment, the lower arm 32 differs in shape from the lower arm 12 of the first embodiment.

More specifically, the lower arm 32 includes a body portion 32a, a base end portion 32b and a tip end portion 32c. The body portion 32a, the base end portion 32b and the tip end portion 32c of the present embodiment correspond respectively to the body portion 12a, the base end portion 12b and the tip end portion 12c of the first embodiment.

As with the lower arm 12 of the first embodiment, the lower arm 32 is manufactured by a single tubular welded steel pipe. However, the cross section of the lower arm 32 has a substantially rectangular shape with curvilinear corners as shown in Fig. 14. In Fig. 14, the curvilinear corner regions of the lower arm 32 are designated by reference symbol 32a1. Hereinafter, the curvilinear corner regions of the lower arm 32 will be referred to as "corner portions 32a1".

As mentioned above, the lower arm 32 has a substantially rectangular cross section with curvilinear corner portions 32a1. Thus, stresses are prevented from locally concentrating on the corner portions. That is to say, it is possible to alleviate concentration of stresses.

As shown in Fig. 14, the minor axis F1 of the substantially rectangular cross section of the lower arm 32 is parallel to the rotation axis J2 existing at the side of the base end portion 32b (namely, the X-axis direction). The major axis F2 of the substantially rectangular cross section of the lower arm 32 is perpendicular to the rotation axis J2. In Figs. 12 to 14, the major axis F2 is parallel to the Y-axis direction.

The body portion 32a of the lower arm 32 is curved to protrude in the direction of arrow G, one of the rotation directions of the lower arm 32 with respect to the swing unit 11 (not shown in Fig. 12) connected to the base end portion 32b, namely one of the rotation directions of the rotation axis J2. While the body portion 32a is curved so as to protrude in the direction of arrow G in the illustrated example, the present disclosure is not limited thereto. The body portion 32a may be curved so as to protrude in the direction opposite to the direction of arrow G. That is to say, the lower arm 32 is preferably curved to protrude in one of the rotation directions of the rotation axis J2.

The welded portion 32d of the lower arm 32 is curved in the same direction as the body portion 32a to extend along the longitudinal direction of the lower arm 32. That is to say, the welded portion 32d is curved to protrude in the direction of arrow G, one of the rotation directions of the lower arm 32 with respect to the swing unit 11 connected to the base end portion 32b (namely, one of the rotation directions of the rotation axis J2). While the welded portion 32d is curved to protrude in the direction of arrow G in the illustrated example, the present disclosure is not limited thereto. If the body portion 32a is curved to protrude in the direction opposite to the direction of arrow G, the welded portion 32d is also be curved in the same direction as the body portion 32a. That is to say, as with the body portion 32a, the welded portion 32d is preferably curved to protrude in one of the rotation directions of the rotation axis J2.

The welded portion 32d is formed in the reduced-stress region of the lower arm 32 selected according to the pre-acquired stress distribution. More specifically, as best shown in Fig. 12, bending stresses attributable to, e.g., the rotating motion of the lower arm 12 or the loads of the upper arm 13 and the like are apt to generate in or around the regions H1. Torsional stresses attributable to the swing motion of the lower arm 12 are prone to generate in or around the regions H2. The bending stresses and the torsional stresses are indicated by the aforementioned stress distribution.

It can be seen in Fig. 12 that the regions H1 where bending stresses are apt to generate and the regions where torsional stresses are prone to generate, are positioned in the curved section of the body portion 32a of the lower arm 32. By bending the body portion 32a in this way, stresses are easy to generate in the curved section. As a consequence, the welded portion 32d can be formed in the region spaced apart from the regions H1 and H2 where stresses are apt to act, namely in the region where stresses are relatively small. This makes it possible to alleviate the stresses acting on the welded portion 32d. Consequently, it is possible to increase the rigidity of the lower arm 32.

The base end portion 32b and the tip end portion 32c are substantially identical in shape with each other. More specifically, the base end portion 32b and the tip end portion 32c are formed such that the connection surfaces thereof (the right in Fig. 13) to which the swing unit 11 and the upper arm 13 are connected stay parallel to the long side of the substantially rectangular cross section of the lower arm 32 and have a flat shape.

Connection holes 33 for connecting the motors M2 and M3 are formed in appropriate positions of the flat surfaces of the base end portion 32b and the tip end portion 32c. The motors M2 and M3 are connected to the connection holes 33 by virtue of fastening members not shown. In this way, the motors M2 and M3 can be connected to the lower arm 32 without going through the plates 20 mentioned earlier. Accordingly, the plates 20 become unnecessary in the lower arm 32, which makes it possible to simplify the configuration of the lower arm 32.

While not specifically shown, as can be appreciated in Fig. 13, the base end portion 32b and the tip end portion 32c are formed such that the cross-sectional area thereof gradually decreases toward the ends thereof (the lower end or the upper end in Fig. 13). As a consequence, the base end portion 32b and the tip end portion 32c can avoid an abrupt change in the cross-sectional area thereof. This makes it possible to distribute the stresses generated in the base end portion 32b and the tip end portion 32c.

As described above, the minor axis F1 of the substantially rectangular cross section of the lower arm 32 is parallel to the rotation axis J2 existing at th side of the base end portion 32b (namely, the X-axis direction). Accordingly, it is possible to increase the bending strength of the lower arm 32.

More specifically, when the lower arm 32 makes a rotating motion about the rotation axis J2, bending stresses are easy to generate in or around the regions H1 of the lower arm 32 as mentioned above. In the lower arm 32 according to the third embodiment, the short sides of the substantially rectangular cross section of the lower arm 32, which show high rigidity against the stresses generated by the rotating motion of the lower arm 32 about the rotation axis J2, are positioned in the regions H1. This makes it possible to increase the bending strength of the lower arm 32.

As described above, in the third embodiment, the lower arm 32 is formed to have a substantially rectangular cross section with curved corner portions. This prevents stresses from locally concentrating on the corner portions. That is to say, it becomes possible to alleviate concentration of stresses. Other configurations and effects remain the same as those of the first embodiment and, therefore, will not be described.

In the third embodiment, there has been described an example where all the four corner portions of the substantially rectangular cross section of the lower arm 32 have a curvilinear shape. However, the present disclosure is not limited thereto.

Fig. 15 is a sectional view similar to Fig. 14, showing a modified example of the lower arm 32 of the robot 1 according to the third embodiment. As shown in Fig. 15, the lower arm 32 of the modified example is formed such that two of the four corner portions of the substantially rectangular cross section have a curvilinear shape.

Even in this case, it is equally possible to alleviate concentration of stresses on the corner portions of the cross section. In the modified example shown in Fig. 15, two of the four corner portions of the substantially rectangular cross section have a curvilinear shape. Alternatively, one or three of the four corner portions may have a curvilinear shape. That is to say, if at least one of the four corner portions of the substantially rectangular cross section is formed into a curvilinear shape, the lower arm 32 can enjoy the aforementioned effects.

In the aforementioned embodiments, description has been made by taking the lower arm 12, 22 or 32 as one example of the link. However, the present disclosure is not limited thereto. In other words, the link may be any member (link) that makes a rotating motion. For example, the link may be the swing unit 11, the upper arm 13 or the first to third wrist units 14, 15 and 16.

In the aforementioned embodiments, description has been made on an example where the robot 1 is a six-axes robot. However, the present disclosure is not limited thereto. It may be possible to use a robot other than the six-axes robot, e.g., a seven-axes robot or an eight-axes robot. Moreover, other kinds of robots such as a dual-arm robot and the like may be used as the robot 1.

Other effects and modified examples can be readily derived by those skilled in the relevant art. For that reason, the broad aspect of the present disclosure is not limited to the specific disclosures and the representative embodiments shown and described above. Accordingly, the present disclosure can be modified in many different forms without departing from the spirit and scope of the disclosure defined by the appended claims and the equivalents thereof.

## Claims

1. A link, comprising a longitudinal base end rotatably connected to a member,
wherein the link is formed into a tubular shape such that a cross section of the link perpendicular to a longitudinal direction of the link has an elliptical shape or a substantially rectangular shape with at least one curvilinear corner.

2. A robot, comprising:
the link of claim 1,
wherein the link rotates about a rotation axis perpendicular to the longitudinal direction of the link.

3. The robot of claim 2, wherein the link has a longitudinal tip end to which an additional member is rotatably connected, and the link is formed such that a cross-sectional area of the link gradually decreases toward the base end and the tip end.

4. The robot of claim 2 or 3, wherein the link is manufactured by a welded steel pipe, the welded steel pipe including a welded portion formed in a reduced-stress region of the link which is selected according to a pre-acquired stress distribution indicating the magnitude of stresses generated in the link.

5. The robot of claim 4, wherein the welded portion is formed on a plane orthogonal to the rotation axis and parallel to the longitudinal direction of the link.

6. The robot of any one of claims 2 to 5, wherein the link includes a body portion, a first end portion welded and connected to one end of the body portion and a second end portion welded and connected to the other end of the body portion.

7. The robot of claim 6, wherein the first end portion and the second end portion are manufactured by welded steel pipes which are higher in tensile strength than a welded steel pipe by which the body portion is manufactured.

8. The robot of claim 6, wherein the body portion includes a neck section.

9. The robot of claim 8, wherein the neck section is formed such that the pipe diameter in a middle region of the body portion becomes smaller than the pipe diameter in end regions of the body portion to which the first end portion and the second end portion are connected.

10. The robot of claim 4, wherein the link is curved to protrude in one of rotation directions of the link with respect to the member.

11. The robot of claim 10, wherein the welded portion is formed to extend along the longitudinal direction of the link and is curved to protrude in one of the rotation directions of the link with respect to the member, the welded portion protruding in the same direction as the protruding direction of the link.

12. The robot of claim 11, wherein the first end portion and the second end portion are substantially identical in shape with each other, the first end portion and the second end portion including connection surfaces to which the member and the additional member are respectively connected, the connection surfaces staying parallel to a long side of the substantially rectangular cross section of the link, the connection surfaces having a flat shape.

13. The robot of any one of claims 2 to 11, wherein the elliptical cross section of the link has a minor axis parallel to the rotation axis.
